# EUROPEAN PATENT APPLICATION

(11) **EP 4 625 358 A1**
(43) Date of publication of application: **01.10.2025**
(21) Application number: 24167161.9
(22) Date of filing: 28.03.2024
(51) Int. Cl.: G06V 20/40, G06V 20/56

(54) **VIDEO DATA PROVISION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method of providing video data from one or more mobile entities to an operator of the one or more mobile entities is provided. The method obtains video data comprising one or more video streams, each video stream being captured by a respective video camera attached to a respective mobile entity and comprising a plurality of sequentially ordered frames. The method processes each of the video streams using a machine learning model trained to identify one or more significant frames. The method initiates provision of at least some of the video data to the operator, the provision of the significant frames being prioritised over the provision of other frames of the video data.

## Description

### Field of the Invention

The present invention relates to the provision of video data. In particular, it relates to the provision of video data from one or more mobile entities to an operator of the one or more mobile entities.

### Background to the Invention

The use of unmanned vehicles is growing rapidly. Unmanned vehicles are vehicles which do not have an on-board human driver and, in some cases, do not have any human being present within the vehicle. The range of fields within which such vehicles are being applied is ever increasing, especially in the case of unmanned aerial vehicles (or drones). As examples, unmanned vehicles may be used to carry out emergency search and rescue missions, carry out inspections of facilities, carry out surveys of geographical areas, carry out various interventions (such as repairs) to systems in hard-to-reach locations, provide delivery services, as well as a number of other applications.

The provision of video data from video sensors (or cameras) onboard such vehicles to an operator in control of (or responsible for) those vehicles is often an essential component to the successful completion of various missions using such vehicles. In some cases, an operator may be in direct control of a vehicle, in which case the video data may be required in order to allow the operator to successfully pilot the vehicle. This may be particularly so for so-called Beyond Visual Line of Sight (BVLOS) operations, wherein the distance between an operator and the vehicle is large (such that the vehicle is not in the operator's sight). In other cases, the vehicles may be expected to operate autonomously some or all of the time. In such cases, a single operator may be responsible for monitoring several different vehicles, using the video data to determine when manual intervention is required and/or to satisfy the mission requirements. For example, an operator may use a fleet of vehicles each of which is programmed to carry out an automated (or semi-automated) search pattern to assist in the completion of a search and rescue mission. Where necessary, the operator may manually control one of the vehicles remotely using the video data from that vehicle. The operator may also monitor the video data from all of the vehicles to look for information suggestive of the presence of survivors in order to successfully carry out their mission.

Unmanned vehicles engaged in missions, such as those discussed above, will commonly encounter environments in which connectivity is poor. This can place limits on the bandwidth that is available for transmission of telemetry and video data.

### Summary of the Invention

In a first aspect of the invention, there is provided s computer-implemented method of providing video data from one or more mobile entities to an operator of the one or more mobile entities, the method comprising: obtaining video data comprising one or more video streams, each video stream being captured by a respective video camera attached to a respective mobile entity and comprising a plurality of sequentially ordered frames; processing each of the video streams using a machine learning model trained to identify one or more significant frames; and initiating provision of at least some of the video data to the operator, the provision of the significant frames being prioritised over the provision of other frames of the video data.

The significant frames may comprise one or more frames associated with an operational event for the respective mobile entity. The operational event may be a predicted collision of the mobile entity.

The significant frames may comprise one or more frames associated with a functional event relating to a type of mission being undertaken by the mobile entity.

The method may further comprise: determining a relative importance of each of the significant frames, wherein the provision of the significant frames to the operator is further prioritised based on the relative importance of each significant frame.

The method is performed by an onboard computer system of a mobile entity, wherein the one or more video streams are each captured by a respective video camera attached to the mobile entity and the provision of the significant frames to the operator may comprise transmission of the one or more significant frames, the transmission of the one or more significant frames being prioritised over the transmission of other frames of the video data.

The method may be performed by a computer system that is remote from the one or more mobile entities and the video data may comprise at least one respective video stream from each of a plurality of mobile entities.

The provision of the significant frames to the operator may comprise transmission of the one or more significant frames to an operator terminal, the transmission of the one or more significant frames being prioritised over the transmission of other frames of the video data.

The method may further comprise: identifying one or more video stream portions, each video stream portion consisting of a plurality of consecutive significant frames within a respective video stream; and progressively transmitting each video stream portion by: assigning each frame of the video stream portion to a respective set of a plurality of sets of frames such that each set of frames comprises frames that are substantially uniformly distributed time-wise across the video stream portion; and transmitting each of the sets of frames in turn.

Processing the video streams may comprise chunking each video stream into a plurality of chunks, each chunk comprising a predetermined number of video frames, and processing the chunks using the machine learning model to identify one or more significant chunks, the frames of the one or more significant chunks being identified as significant frames.

The method may further comprise: obtaining an indication of the significance of one or more frames of the one or more video streams; and retraining the machine learning model using a machine learning algorithm and training data comprising the one or more frames.

The mobile entity may be an unmanned mobile entity. Preferably the mobile entity may be an unmanned aerial vehicle.

The identification of the one or more significant frames by the machine learning model may be further based on sensor data from one or more sensors on the mobile entity.

In a second aspect of the invention, there is provided a computer system comprising a processor and a memory storing computer program code for performing a method according to the first aspect.

In a third aspect of the invention, there is provided a computer program comprising instructions which, when executed by a computer, cause the computer to carry out a method according to the first aspect.

In a fourth aspect of the invention, there is provided a computer-readable data carrier having stored thereon the computer program of the third aspect.

In a fifth aspect, there is provided a data carrier signal carrying the computer program of the third aspect.

### Brief Description of the Figures

Embodiments of the present invention will now be described by way of example only, with reference to the accompanying drawings, in which:
Figure 1 is a block diagram of a computer system suitable for the operation of embodiments of the present invention;
Figure 2 is a schematic diagram of an exemplary system with which embodiments of the invention may operate; and
Figure 3 is a flowchart representation of a method of providing video data from one or more mobile entities to an operator of those mobile entities according to embodiments of the invention.

### Detailed Description of Embodiments

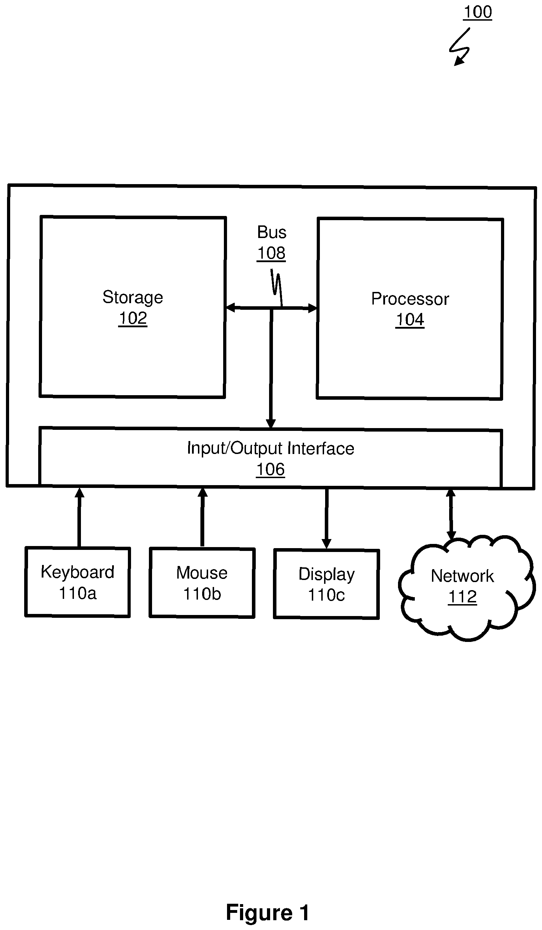

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 11 0c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

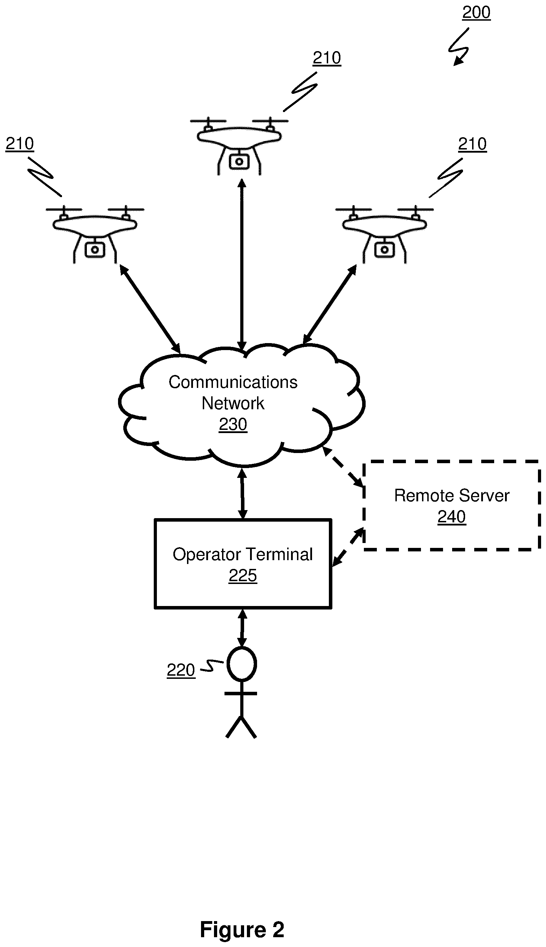

Figure 2 is a schematic diagram of an exemplary system 200 within which embodiments of the invention may operate. The system 200 comprises a plurality of mobile entities 210 which are configured to transmit video data to an operator 220 of the mobile entities via a communications network 230.

The mobile entities 210 shown in figure 2 are unmanned aerial vehicles (UAVs) (or drones). The remaining discussion of the invention will therefore refer to the mobile entities 210 as unmanned aerial vehicles (UAVs) (or drones). However, it will be appreciated that in other cases different types of mobile entities, such unmanned ground vehicles (UGVs) may be used instead of or in addition to the use of UAVs. Similarly, although the invention is primarily described in relation to unmanned vehicles, it will be appreciated that it is possible for the invention to be beneficially applied to the provision of video data from manned vehicles.

The UAVs 210 each comprise one or more video cameras (or sensors) for capturing video data of the drone's immediate environment. As will be appreciated, in many cases, more than one video camera may be present. For example, multiple cameras may be used to capture different views from the drone. A typical arrangement of cameras may include a forward-facing camera to capture video footage in the direction of travel of the drone, as well as downwards-facing camera to capture video footage of the ground beneath the drone. Of course, cameras may additionally or alternatively be mounted in other orientations on the UAV to capture other views of the surrounding environment. Similarly, multiple different types of camera may be present on the same UAV. Each different type of camera may be configured to capture video images using different techniques. These different types of camera may include, for example, visible spectrum cameras, infrared (either far-infrared or near-infrared) cameras, ultraviolet cameras and x-ray cameras. Although of course any other suitable technique for generating a stream of images that provide a representation of the immediate surroundings of the UAV 210 may be used in addition or as an alternative to such cameras. For example, ranging techniques such as LIDAR, RADAR or SONAR may be used to generate a sequence of "images" which can be treated as video data. In some cases, the UAV 210 may use different types of cameras to cover different views from each other. For example, a UAV 210 may include a visible spectrum camera as a forward-facing camera and an infra-red camera as a downward-facing camera. However, in other cases, the views of different types of cameras may substantially overlap. For example, a UAV 210 may include both a visible spectrum camera and an infra-red camera oriented to capture a downward-facing view. As will be appreciated by those skilled in the art, different types of information about each view may be obtainable from different types of camera.

The UAVs 210 may each additionally comprise one or more onboard computer systems, such as computer system 100. These onboard computer systems may be configured to carry out various data processing and/or automated command and control tasks onboard the UAV 210.

The UAVs 210 also each comprise communications hardware (i.e. a transceiver) to enable them to transmit video data captured from their video camera(s) to the operator 220 via the communications network 230. As will be familiar to those skilled in the art, this communications hardware may also enable telemetry for the drone to be transmitted to the operator 220 via the network 230. Similarly, command and control data (or instructions) may be transmitted by the operator 220 to the UAVs 210 via the network 230 and received by the communications hardware to enable the operator 220 to control the operation of the UAVs 210.

The communications network 230 may be any suitable type of network or combination of networks to enable this communication between the UAVs 210 and the operator 220 to be effected. In this example, the communications network 230 is a mobile network, such as a 5G network. However, other types of networks may be used instead (or in addition).

The operator 220 uses an operator terminal 225 in order to view the video data that has been provided to the operator 220. The operator terminal 225 is a computer system, such as computer system 100, which is configured to receive the video data (in some cases directly from the UAVs 210 via the communications network 230) and display it to the operator 225. Optionally, the system 200 may comprise a remote server 240, such as the computer system 100, which receives the video data from the drones and conveys video data onwards to the operator terminal 225, as will be discussed in more detail further below.

Although three UAVs 210 are present in the system 200 shown in figure 2, it will be appreciated that different numbers of UAVs 210 may be used in other cases. Indeed, in some cases, the invention may be utilised in respect of a single UAV having multiple video cameras as will be apparent from the following description of the invention.

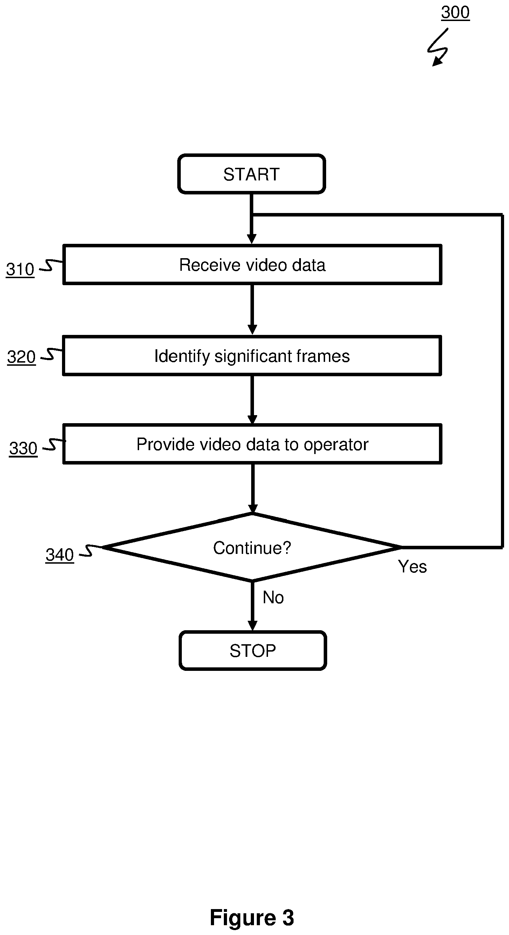

Figure 3 is a flowchart representation of a method 300 of providing video data from one or more mobile entities (such as the UAVs 210 shown in figure 2) to an operator of those mobile entities (such as the operator 220 shown in figure 2) according to embodiments of the invention. In some cases, the method 300 may be performed by an onboard computer system of the UAVs 210. However, in other cases, the method 300 may be performed by a computer system that is remote from the one or more mobile entities, such as the remote server 240 shown in figure 3. As will be appreciated from the following description, different advantages may be achieved by performing the method 300 at these different locations within the system 200. Indeed, in some cases, the method 300 may be separately performed both locally onboard the UAVs 210 and remotely at the remote server 240. The method 300 starts at an operation 310.

At operation 310, the method 300 receives video data from one or more of the UAVs 210. The video data comprises one or more video streams. Each of the video streams comprise a plurality of sequentially ordered frames that were captured by a respective video camera attached to a respective one of the UAVs 210.

Where the method 300 is performed locally at a UAV 210 the video data may comprise video streams from all of the video cameras attached to that UAV (and none from any other UAVs 210). In this case, the video data may be provided to (or retrieved by) the onboard computer system that is performing the method 300 directly from the video cameras via an onboard communications bus or internal communications network of the UAV 210.

Conversely, where the method 300 is performed remotely from the UAVs 210 at the remote server 240, the video data may comprise video streams from the video cameras attached to different UAVs 210. In this case, the video data may be transmitted to the remote server 240 by the UAVs 210 via the communication network 230.

The method 300 may store the received video data in a memory (or buffer) whilst it is being processed. In some cases, operation 310 may be performed substantially in parallel to the remaining operations, with newly received video data being added to the memory for processing by the other operations at the earliest operation.

As will be appreciated by those skilled in the art, where it is not possible to provide all of the received video data to the operator 220 (e.g. because the rate at which video data is received exceeds the available bandwidth), a cleanup process may operate to remove video data from the memory so as to prevent the amount of video data in the memory from exceeding a predetermined size. This process may, for example, remove the oldest video data in the memory in order to achieve this. Similarly, once video data has been provided to the operator 220, it may be removed from this memory. In some cases, the video data may additionally be stored in other memory (e.g. onboard the UAV) to allow later retrieval where desired.

In some cases, the operation 310 may run substantially in parallel to the other operations of the method 300. That is to say, operation 310 may add video data to the memory as it arrives to be processed by the other operations of the method 300 as the opportunity arises. However, in other cases, the method 300 may wait for a certain amount of video data to have been received at operation 310 before continuing to the remaining operations. For example, in some cases, the method 300 may operate on chunks of video data (as will be discussed further below), whereby each chunk comprises a predetermined number of video frames. Accordingly, in such cases, the method 300 may wait until a complete chunk of video data (i.e. a predetermined number of video frames from a particular video stream) has been received before proceeding to the remaining operations to process that chunk of video data. For example, small video chunks of 5, 10, 15, 20, 25 or 30 frames may be used. At a frame rate of 30 frames per second, these chunk sizes represent approximately 0.16 seconds, 0.33 seconds, 0.5 seconds, 0.66 seconds 0.83 seconds and 1 second of video footage respectively. Of course, any suitable chunk size may be used instead.

Having received some video data at operation 310, the method 300 proceeds to an operation 320.

At operation 320, the method 300 processes the video streams using a machine learning model to identify one or more significant frames from amongst the frames of the video streams.

The machine learning model is a model that has been trained using a suitable machine learning technique and a set of training data to distinguish significant frames from insignificant ones. In other words the machine learning model is configured to classify each frame as being either significant or not. Where the method 300 operates on chunks of video data, operation 320 may be performed on a chunk-wise basis. That is to say, the operation may process all the frames of a chunk of video data together to determine whether the chunk is significant (or not). This can be achieved by configuring the machine learning model to operate on an entire chunk of video data, for example, by stacking the frames and providing the stacked frames as the input to the machine learning model.

There are a number of machine learning techniques that may be used to train the machine learning model, including supervised learning techniques, unsupervised learning techniques and active learning techniques. Each of these techniques will now be discussed in turn.

Under supervised learning techniques, the model is trained using a set of labelled training data. That is to say, the training data comprises a plurality of sample inputs for the model to process each of which is associated with a respective label indicating a correct classification for that input (i.e. in this case, whether the sample input is considered to be significant or not). Where the method 300 operates on a frame-wise basis, this training data may comprise multiple sample frames (e.g. frames that have been previously captured by UAVs 210) and labelled as being either significant or insignificant. Some of these frames may be insignificant frames, while others may be significant frames. Similarly, where the method 300 operates on a chunk-wise basis, this training data may comprise multiple sample stacked frames (e.g. by stacking chunks of video data that have been previously captured by UAVs 210) and labelled as being either significant or insignificant.

In some cases, the frames (or chunks) that are labelled as significant in the training data may comprise frames (or chunks) that are associated with an operational event for the UAV 210. That is, frames (or chunks) that are taken at substantially the same time as an event that was deemed to be significant to the operation of the UAV 210. For example, the operational event may be a predicted collision of the UAV 210. In such cases, frames (or chunks) that were captured immediately preceding previous UAV crashes may be included in the training data and labelled as being significant. Similarly frames (or chunks) that were captured during previous UAV flights experiencing normal operating conditions may be included in the training data and labelled as being insignificant. Accordingly, the machine learning model can learn to identify (or classify) frames (or chunks) that are predictive of a collision of the UAV 210 as being significant. Of course, other types of operational events, such as near misses or turbulence, may also (or alternatively) be reflected in the training data such that the machine learning model may also (or alternatively) identify frames (or chunks) relating to such operational events as being significant.

In some cases, the frames that are labelled as significant in the training data may comprise frames that are associated with a functional (or mission-specific) event relating to the type of mission being undertaken by the UAV 210. For example, a machine learning model to be used by a UAV 210 undertaking search and rescue missions may be trained to identify chunks with people or patterns of objects (such as crash debris) as being of interest. Accordingly, frames (or chunks) of video data captured from previous missions that are considered significant to the mission may be included in the training data labelled as significant. Similarly, frames (or chunks) of video data captured from previous missions that are considered insignificant to the mission may be included in the training data labelled as insignificant. For example, frames (or chunks) of the sea (without any additional objects of interest being present) may be included in the training data labelled as being insignificant.

Any suitable supervised learning technique, such as a neural network, convolutional neural network, transformer, and so on, may be used to training the machine learning model using the training data, as will be familiar to those skilled in the art.

By contrast, unsupervised learning techniques do not require the training data to be labelled. Instead, such techniques generally attempt to learn a model of *"normality"* (i.e. the underlying prevalent structure of the data) from the training data and identifies as *"anomalous"* any data that does not fit this model of *"normality".* Such techniques may be utilised to train a machine learning model by using a set of training data comprising video footage from previous UAV 210 missions. An unsupervised learning algorithm may then train the machine learning model based on this set of training data to identify what is *"normal"* and what is *"anomalous"* for a UAV 210 undertaking such missions. Those frames (or chunks) that are identified as being anomalous may be considered to be significant frames (or chunks).

One suitable unsupervised learning technique for this purpose is an autoencoder. As will be familiar to those skilled in the art, an autoencoder is a neural network that consists of two parts, an encoder and a decoder. The autoencoder takes a frame (or chunk) of video data as an input, this video data is then encoded (to a lower dimensional encoding) by the encoder part of the autoencoder and subsequently decoded by the decoder part to recreate the frame (or chunk) as an output. The differences between the input data and the output data is referred to as the reconstruction error of the autoencoder. During training, the encoder part of the autoencoder learns an encoding of the training data that enables the majority of frames (or chunks) in the training data to be recreated by the decoder part as closely as possible. Accordingly, this encoding enables *"normal"* frames to be recreated by the autoencoder reasonably well, with a low reconstruction error. However, *"anomalous"* frames are much less likely to be recreated well by the autoencoder and so will typically result in much higher reconstruction errors. Therefore, the reconstruction error resulting from feeding a frame (or chunk) of video data into a trained autoencoder can be used to classify that frame (or chunk) as being normal (or insignificant) if it is below a predetermined threshold or as being anomalous (or significant) if it is above (or equal to) the predetermined threshold.

As will be appreciated by those skilled in the art, where the model is solely trained to detect operationally significant frames (or chunks) of video data for a UAV 210, an unsupervised learning technique can use training data from UAVs undertaking a wide range of different types of mission. However, where the model is being trained to identify functionally (or mission-specific) frames (or chunks) within video data (either additionally or alternatively to operationally significant frames or chunks), the training data will need to be restricted to that collected from UAVs undertaking that type of mission.

In general it can be expected that the *"significant"* moments in the video data for most UAVs 210 will be few and far between. For example, drone crashes (or other operationally significant events) are relatively rare. Similarly, in a sea-based search and rescue mission, the majority of the video data is likely to show the sea with no significant objects being present. Therefore this unsupervised learning approach can provide a trained machine learning model which is capable of identifying significant frames (or chunks) of video data without incurring the expense of obtaining a labelled data set. Indeed, in some cases, such unsupervised learning may take place for a UAV 210 *"on the fly"* during a mission such that the machine learning model learns its *"normality"* model of the video data for the UAV 210 from an earlier part of the mission to enable it to identify *"significant"* frames (or chunks) of video data during a later part of the mission. This model may, in some cases, be continuously refined (or retrained) as the UAV 210 undertakes the mission.

Finally, when active learning techniques are employed, an oracle (typically a human) guides the training of the model over time. In particular, the model automatically labels data where it is confident in its classification of that data (e.g. where a confidence level in the classification exceeds a predetermined threshold). However, the model requests assistance from the oracle where it is less confident in its classification of certain input data (e.g. where a confidence level in the classification is lower than a predetermined threshold). The oracle then provides the correct classification for that data, which is used to update the parameters of the model to reflect the new knowledge. Following this approach, the model may, in some cases, be initially trained using the supervised or unsupervised techniques discussed above and then continually refined by requesting input from the operator 220 (acting as the oracle) as to the significance of particular frames (or chunks) of video data. That is, the operator 220 may be requested by the model to indicate whether a particular frame (or chunk) of video data should be classified as being significant or insignificant and their answer may be used as part of the active learning for the model.

Of course, even where an active learning approach is not utilised, such that the model does not actively request input from the operator 220, the operator 220 may nonetheless voluntarily provide indications to the user as the relevance of specific frames (or chunks) of video data that have been provided to the operator 220. These indications that particular frames (or chunks) are significant (or insignificant) may then be incorporated into the training data and used to retrain the model accordingly.

In some cases, the machine learning model may be configured to determine a level of significance of each frame (or chunk) rather than just a simple binary classification of its significance. Those frames (or chunks) having a level of significance above a predetermined threshold may all be classified as significant (with those below, or equal to, the predetermined threshold being considered insignificant). However, the relative importance of each of those significant frames can also be determined based on their respective levels of significance determined by the model.

The machine learning model may, in some cases, be configured to utilise other data in the classification of a video frame (or chunk). For example, the machine learning model may be configured to further base its classification of a video frame (or chunk) based on various sensor data (e.g. altitude data, speed data, temperature data, etc.) received from one or more sensors on the UAV 210 in addition to the video data. That is to say, the machine learning model may utilise additional non-image data that relating to substantially the same point in time as a frame (or chunk) of the video data in order to classify the frame (or chunk). Accordingly, the training data used to train such a model may additionally comprise such non-image sensor data associated with each sample frame (or chunk) input.

In some cases, the method 300 may require that a density of significant frames is above a predetermined threshold for them to be considered as significant. That is to say, the method 300 may use the output from the machine learning model to identify portions of each video stream that have a density of significant frames that exceeds the predetermined threshold. The method 300 may then additionally identify the remaining frames of such portions of each video stream as also being significant frames (such that the entire portion of video stream is considered to be significant). Similarly, the method 300 may change the classification of any frames (or chunks) of video data that are not part of a portion of a video stream having a density of significant frames that exceeds the predetermined threshold such that they are treated as insignificant frames. The method may employ an adaptive window to search for portions of video stream that satisfy the predetermined threshold density of significant frames. Accordingly, the size of the window (or length of the portion of the video stream) may be increased to search for the largest window (or longest length of portion) that still satisfies the predetermined threshold density of significant frames. Similarly, where this predetermined threshold is not satisfied, the size of the window may be decreased to see whether a smaller window (or shorter length of portion) would satisfy the predetermined threshold density of significant frames. Constraints may be placed on this adaptive window search. For example, a maximum size of window (or length of portion) may be specified. Similarly, a minimum size of window (or length of portion) may also (or alternatively) be specified.

In any case, having identified one or more significant frames at operation 320, the method 300 proceeds to an operation 330.

At operation 330, the method 300 provides at least some of the video data to the operator. In providing the video data to the operator 220, the method 300 prioritises providing the significant frames over other video data. That is to say, where significant frames remain that have not yet been provided to the operator 220, these frames are provided in preference to any insignificant frames that have not yet been provided to the operator 220. The insignificant frames may then be provided after the significant frames have been provided assuming there is capacity to do so (and assuming that no further video data comprising significant frames is received in the meantime).

Where a relative importance of each of the significant frames has been determined, the significant frames may be provided in order of their relative importance. That is to say, frames having a higher level of significance (as determined by the model) may be provided before frames having a lower level of significance.

In some cases, providing the video data to the operator 220 may comprise transmitting the video data. For example, where the method 300 is performed by a computer system onboard a UAV 210, providing the video data to the operator 220 may comprise transmitting the video data to the operator 220 via the communications network 230. As another example, where the method 300 is performed by the remote computer system 240, that computer system 240 may also be remote from the operator 220. In such cases, providing the video data to the operator 220 may also comprise the remote computer system 240 transmitting the video data via a communications network (either the same as or different from communications network 230) to the operator terminal 225.

The transmission of the video data may be performed progressively. In particular, where a portion of a video stream (i.e. a consecutive sequence of frames of the video stream) is to be transmitted, that portion may be transmitted in a progressive manner such that some information for the video stream portion is conveyed in an initial transmission and then further information is provided in subsequent transmissions until the entire information for the video stream portion has been conveyed. Through such progressive transmission, the operator 220 is provided with at least some useful information from the video stream portion as soon as the initial transmission is made even if it is not possible for the entire information of the video stream portion to be conveyed (e.g. because the UAV 210 crashes before all transmissions can be made or because of severe bandwidth limitations).

One way of progressively transmitting the video data for a portion of a video stream is through a time-based progressive transmission. In this approach, an initial set of frames for a portion of a video stream is transmitted first, with one or more subsequent sets of frames being sent after the initial set of frames has been completely transmitted. By distributing the frames of the portion of the video stream evenly between the sets, the frames in each set may be substantially uniformly distributed time-wise across the video stream portion. Each set will therefore comprise non-sequential frames from a variety of positions within the video stream. Similarly, a number of intervening frames between each of the non-sequential frames included in the set (as they occur in the video stream portion) will be excluded (or not included) in the set. The number of intervening frames that are excluded from each set may be approximately constant for all of the frames within each set. Accordingly, even if only the initial set of frames is transmitted, at least some information from across the entirety (or almost the entirety) of the portion of the video stream will have been provided to the operator 220. As an example, if a portion of the video stream to be transmitted comprises 60 frames, the 1^{st}, 11^{th}, 21^{st}, 31^{st}, 41^{st} and 51^{st} frames may be transmitted in an initial transmission. Then the 6^{th}, 16^{th}, 26^{th}, 36^{th}, 46^{th} and 56^{th} frames may be transmitted in a second transmission. This process may be repeated until all of the frames have been transmitted. As can be seen, each subsequent transmission effectively fills in some of the gaps in the sequence of frames for the video stream portion. Preferably (though not necessarily) the order in which the sets of frames are transmitted is determined so as to provide as uniform a distribution of frames across the portion of the video stream to the operator 220 as possible when combined with the sets of frames that have already been transmitted. Accordingly, the next set for transmission may be chosen such that the frames comprised in that set are furthest (i.e. separated by the most number of frames) from those frames that have already been transmitted in previous sets.

Suitable compression techniques may also be combined with this time-based progressive transmission technique. For example quality-based progressive transmission techniques may be used to transmit the frames in each set. Using this approach, an initial transmission for a set may provide a low quality (e.g. blurry) image of each frame in the set, with subsequent transmissions providing additional detail to be added to each frame in the set until enough detail has been provided over successive transmissions to fully recreate each frame in the set. Again, this technique enables some information from the frames in the set to be obtained by the operator 220 even where it is not possible to fully transmit all the information to fully recreate each frame in the set. In some cases, it may be desirable to transmit all of the sets of frames at an initial level of quality before incrementing the quality of all of the sets of frames to the next level of quality and so on until the full level of quality has been provided for all of the sets of frames, enabling full recreation of the frames across the entire video stream portion. This approach may be useful, for example, in situations where valuable information can be expected to be obtained from even low quality images and/or where the information that can be obtained may be expected to vary substantially over the duration of the video stream portion such that having access to the entirety of the video stream portion (i.e. all frames) at a low quality is more useful than a fewer number frames at a higher level of quality. In other cases, it may be desirable to transmit each set of frames at each of the varying levels of quality until the full quality has been provided for all of the frames in that set before proceeding to transmit the next set. This approach may be useful, for example, in situations where the detail provided by the full quality image is expected to provide a much greater amount of information than a lower quality image and/or where the information that can be obtained is not expected to vary substantially over the duration of the video stream portion such that having access to full quality frames uniformly distributed time-wise across the video stream portion is likely to be more useful than having all of the frames for the video stream portion at a lower level of quality.

In some cases, the method 300 may be performed on a device that is local to the operator 220. For example, the operator terminal 225 may function as the remote computer system 240 by performing the method 300. In such cases, the provision of the video data to the operator 220 may comprise displaying the video data to the operator 220. The prioritisation of the significant frames may involve prioritising the display of those significant frames over other frames of the video data. This may be useful where the operator 220 is using multiple autonomous (or semi-autonomous) UAVs 210 simultaneously to carry out a mission. In such cases, the operator 220 may receive video data comprising multiple video feeds from each of the UAVs 210. As will be appreciated there are many types of interface that may be provided for the operator 220 to manage the fleet of UAVs 210 and the exact nature of the presentation of information within the interface is not especially relevant for the operation of the invention. In general the interface may provide one or more prominent locations (or areas) which are intended for displaying information that the operator 220 is expected to focus on. In the simplest cases, the entire display may be dedicated to displaying a single video feed. In such cases, prioritising the provision of the significant frames to the operator 220 may comprise ensuring that they are displayed to the operator in the single visible video feed that is provided using the entire display. However, in other cases, more complex interfaces may be defined with other less prominent locations (or areas) also being provided for displaying information that give the operator 220 an overview but is not expected to be the main focus of their attention. For example, the interface may provide a large main area for displaying a video feed in a high amount of detail that the operator 220 can focus on together with a small thumbnail-sized area for each available video feed so as to give the operator 220 an overview of the available video feeds and allow manual selection as to which feed should be displayed in the large main area. Accordingly, in such cases, prioritising the provision of the significant frames to the operator 220 may comprise ensuring that they are displayed in one of the prominent locations on the interface, such as the large main area. As will be appreciated, the operation of this invention locally on a device of the operator to control the provision of video data to the operator 220 can assist operators operating a large fleet of UAVs 210 to more easily keep up to date of the most significant events occurring within that fleet and make it less likely that the operator 220 will miss a significant event.

Having provided at least some of the video data to the operator at operation 330, the method 300 proceeds to an operation 340.

At operation 340, the method 300 determines whether to continue processing video data for the UAVs 210. As will be appreciated, the method 300 may typically be expected to run continuously during the UAVs' 210 operation to process and provide new video data as it becomes available. Accordingly, the method 300 may continue operating until a stop signal is received. Where it is determined that the method 300 is to continue operating to process video data for the UAVs 210, the method 300 returns to operation 310 to repeat operations 310, 320, 330 and 340 in respect of new video data. Otherwise, the method 300 ends.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer-implemented method of providing video data from one or more mobile entities to an operator of the one or more mobile entities, the method comprising:
obtaining video data comprising one or more video streams, each video stream being captured by a respective video camera attached to a respective mobile entity and comprising a plurality of sequentially ordered frames;
processing each of the video streams using a machine learning model trained to identify one or more significant frames; and
initiating provision of at least some of the video data to the operator, the provision of the significant frames being prioritised over the provision of other frames of the video data.

2. The method of claim 1, wherein the significant frames comprise one or more frames associated with an operational event for the respective mobile entity.

3. The method of claim 2, wherein the operational event is a predicted collision of the mobile entity.

4. The method of claim 1 or claim 2, wherein the significant frames comprise one or more frames associated with a functional event relating to a type of mission being undertaken by the mobile entity.

5. The method of any one of the preceding claims, wherein the method further comprises:
determining a relative importance of each of the significant frames,
wherein the provision of the significant frames to the operator is further prioritised based on the relative importance of each significant frame.

6. The method of any one of the preceding claims, wherein the method is performed by an onboard computer system of a mobile entity, wherein the one or more video streams are each captured by a respective video camera attached to the mobile entity and the provision of the significant frames to the operator comprises transmission of the one or more significant frames, the transmission of the one or more significant frames being prioritised over the transmission of other frames of the video data.

7. The method of any one of claims 1 to 5, wherein the method is performed by a computer system that is remote from the one or more mobile entities and the video data comprises at least one respective video stream from each of a plurality of mobile entities.

8. The method of claim 7, wherein the provision of the significant frames to the operator comprises transmission of the one or more significant frames to an operator terminal, the transmission of the one or more significant frames being prioritised over the transmission of other frames of the video data.

9. The method of claim 6 or claim 8, wherein the method further comprises:
identifying one or more video stream portions, each video stream portion consisting of a plurality of consecutive significant frames within a respective video stream; and
progressively transmitting each video stream portion by:
assigning each frame of the video stream portion to a respective set of a plurality of sets of frames such that each set of frames comprises frames that are substantially uniformly distributed time-wise across the video stream portion; and
transmitting each of the sets of frames in turn.

10. The method of any one of the preceding claims, wherein processing the video streams comprises chunking each video stream into a plurality of chunks, each chunk comprising a predetermined number of video frames, and processing the chunks using the machine learning model to identify one or more significant chunks, the frames of the one or more significant chunks being identified as significant frames.

11. The method of any one of the preceding claims, wherein the method further comprises:
obtaining an indication of the significance of one or more frames of the one or more video streams; and
retraining the machine learning model using a machine learning algorithm and training data comprising the one or more frames.

12. The method of any one of the preceding claims, wherein the mobile entity is an unmanned mobile entity, preferably wherein the mobile entity is an unmanned aerial vehicle.

13. The method of any one of the preceding claims, wherein the identification of the one or more significant frames by the machine learning model is further based on sensor data from one or more sensors on the mobile entity.

14. A computer system comprising a processor and a memory storing computer program code for performing the steps of any one of claims 1 to 13.

15. A computer program comprising instructions which, when executed by a computer, cause the computer to carry out the method of any one of claims 1 to 13.
